(19) Europäisches Patentamt
European Patent Office
Office européen des brevets

(11) **EP 2 772 474 B1**

(12) **EUROPEAN PATENT SPECIFICATION**

(45) Date of publication and mention
of the grant of the patent:
**23.05.2018 Bulletin 2018/21**

(51) Int Cl.:
***C05F 17/02*** (2006.01)   ***E04F 17/12*** (2006.01)

(21) Application number: **14000563.8**

(22) Date of filing: **18.02.2014**

(54) **Vertical composter for home-condominium and use thereof**

Vertikaler Komposter für Eigentumswohnungen und dessen Verwendung

Composteur vertical pour immeuble d'appartements et son utilisation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2013 IT BA20130018**

(43) Date of publication of application:
**03.09.2014 Bulletin 2014/36**

(73) Proprietor: **Fiorente, Francesco Paolo
70015 Noci (BA) (IT)**

(72) Inventor: **Fiorente, Francesco Paolo
70015 Noci (BA) (IT)**

(56) References cited:
**DE-A1- 3 019 253       DE-A1- 3 743 651
DE-C1- 3 217 725       DE-U1- 29 604 924
US-A1- 2001 040 131**

- **DATABASE WPI Week 201265 Thomson
  Scientific, London, GB; AN 2012-D79702
  XP002716699, & KR 2012 0026230 A (GK
  ECONOLOGY CO LTD) 19 March 2012
  (2012-03-19)**
- **DATABASE WPI Week 199420 Thomson
  Scientific, London, GB; AN 1994-163715
  XP002716700, & JP H06 107303 A (HITACHI LTD)
  19 April 1994 (1994-04-19)**
- **DATABASE WPI Week 199250 Thomson
  Scientific, London, GB; AN 1992-409964
  XP002716701, & JP H04 305285 A (TODA
  KENSETSU KK) 28 October 1992 (1992-10-28)**
- **DATABASE WPI Week 200870 Thomson
  Scientific, London, GB; AN 2008-L96760
  XP002716702, & KR 2008 0029937 A (MOON S H)
  3 April 2008 (2008-04-03)**

## Description

### 2.1.1 Introduction

In industrialized countries the correct planning and management of the garbage disposal is increasingly taking the character of the urgent need. The growing production of garbage and the still-established habit to deposit garbage in an indiscriminate way is causing a lot of economic and environmental damages that dramatically impose specific actions ranging from public awareness to the identification of disposal systems alternative to landfills, the search of new techniques and technological processes and systems that minimize environmental impacts. It is therefore essential: producing less waste (prevention); reusing, recycling and recovering the same by differentiating the waste collection; controlling the heterogeneous disposal of toxic and/or polluting waste. In this context, today it is a forced choice to separate heterogeneous, products, to adopt, near the garbage production centre, the subsequent treatment spinnerets. Composting is the treatment of the wet organic garbage technology that, for the action of the aerobic microorganisms, transforms the organic garbage in compost, i.e. a natural organic fertilizer.

### 2.1.2 Conditions and biological dynamics of the composting process

Composting is therefore the decomposition, in controlled conditions, of the biodegradable waste conducted by the aerobic microorganisms, i.e. a process of biological stabilization promoted by aerobic bacteria that, operating bio-oxidant exothermic reactions, determine a thermophile sanitizing state.

Bacteria involved are of two types: mesophyll ones that trigger reactions and operate around 30 °C; thermophile those that occur later when the temperature rises up to values of 75 °C. Above this temperature the process stops.

Conditions that influence the composting process are presence of nutrients in optimal proportions; substrate porosity; aeration; humidity; temperature; ph.

The presence in the compostable of balanced nutrients influences the action of the microorganism responsible for degradation. For an optimal development of the microbial flora, the C/N ratio should be between 25 and 35. If values exceeding 35, nitrogen can be considered as limiting agent with consequent deceleration of the metabolic activity and therefore an elongation of the composting period.

Substrate porosity affects the process through the influence on the aeration. Larger particles ensure greater ventilation but also more difficulty in the degradation. During the process, porosity is greater at the beginning, but later it decreases due to the decomposition and the settling of the compost heap.

The presence of the oxygen is an indispensable factor for the development and the activity of the aerobic microorganism. The lack of oxygen causes anoxic conditions and the production of acrid smells. During the bioxidative phase, the oxygen percentage should be between 5% and 15% ensuring, in such way: the stoichiometric oxygen requirement, not excessive temperatures, humidity reduction. During the phase of maturation, the oxygen requirement decreases in percentages between 1% and 5%.

Humidity has a fundamental role in the metabolic activity of the microorganisms: tenors of 50 - 55% by weight are optimal; values exceeding 65% hinder the diffusion of the oxygen inside the mass decaying and can allow the development of anoxic conditions. Conversely, conditions around 40% create the deceleration of the biological process that tends to stop at around 15% moisture.

Temperature characterizes the different stages of the process. At 50°C we have the best conditions to reach the maximum transformation efficiency. Values exceeding 65 °C determine good conditions of sanitation but also the deceleration of the process. Anyway, for at least three days the organic materials have to be maintained at a temperature of 55 °C minimum for an adequate fermentation.

The pH of the reactions varies with temperature during the process; from values of 5 - 7 of the beginning organic fraction, it passes to values of 4 - 5 due to the production of organic acids and then rises after about 3 days to values of 8 - 8,5. During all the process until the end of the maturation, it has a slight final decrease to pH 7 - 8. A lower pH indicates oxygen lack and in such a case, it is necessary to improve the aeration.

### 2.1.3 Prior art

Nowadays composting is practiced: in home composting systems; in centralized composting centers (almost all compost derives from such structures) and in peripheral or community composting plants.

Home composting is a procedure used to manage alone the organic fraction of the urban solid waste and it is practiced, in almost all cases, from people who have a strip of garden. In a dedicated area (on the ground or in a hole), food waste from the kitchen and the garden is taken and accumulated or a composter is used, i.e. a container that promotes and preserves heat during winter. There are industry produced composters, but also hand - made with waste material. In these, a periodic overturning of the material is needed to maintain a sufficient level of porosity and to obtain acceptable results. In the following there are patents that propose garden composters with few differences among them. For some solutions and technical characteristics adopted, the composters might result proposed again in this patent application, in the claims 1 to 8:

- D5) - DE 3217 725 c1 (DOERING ERICH) 21 April 1983 (1983-04-21)
Garden composter characterized by an insulating outer casing that does not release the heat enveloped during the degradation reactions; it allows the passage of gas and vapor from a basket with a grid within which the compostable is inserted, that is directly put on the ground, so to create a condensation and download zone, through which the oxygen is called back from the outside to the inside because of the generation of a pressure difference.

- D6) - DE 3019 253 A1 (DOERING ERICH) 26 November 1981 (1981-11-26);
   Garden composter similar to the previous.
- D7) - DE 296 04 924 U1 (JAEGER GEORG [DE]) 15 May 1996 (1996-05-15);
   Garden composter similar to the previous.
- D8) - DE 37 43 651 A1 (WOLF GERAETE GMBH [DE]) 6 July 1989 (1989-07-06);
   Garden composter similar to the previous.
- D9) - US 2001/040131 A1 (YAMANE TAKAAKI [JP]) 15 Nov 2001 (2001-11-15)
   System for the disposal of waste that uses the microorganism bioactivity and recirculation system with transfer of material through conveyors or other.

Materials obtained in the garden's composters in 3/4 months of composting (more time in winter, less in summer) is used as a fertilizer for the garden.

In commerce, there are also indoor home composters, which could be used from anyone who does not have either a big or little garden. They are little machines that have a mixing system generally electric, a pump for the aeration of the garbage, a filter against bad odors, an electrical resistance that assures a constant temperature of about 40 °C into the thermo-insulated container. Organic waste produced in the kitchen is thrown into the machine, which shall stir and aerate it, causing a much more rapid composting process than the garden composters can do. Such composter in theory only works if proportions of the starting substances are well controlled. But this is not easy and requires a lot of knowledge on the subject of composting and dedication that in some cases may not be enough (presence in the food waste and/or in the support materials of fungicides or stabilizers); ultimately in most cases there are bad odors who warn against the use.

As examples of "indoor home composter", that is a device installed inside the building that transforms the organic waste in compost, there is the patent D2) - JP H06 107303 A (HITACHI LTD) 19 April 1994 (1994-04-19). The system is a disposer situated in a common space of the building that serves several users. In it the food remains and some other types of waste are downloaded: food remains are transformed in compost; the other types of waste like cans, plastic bottles, etc. are reduced in volume and transformed in small pieces. The compost obtained and the other types of materials previously crushed and/or reduced in volume are discharged in a duct that brings them to ground floor in a tank from where they are taken. It is also present a drainpipe for gasses and water.

Industrial composting is the activity of transformation in soil of the wet fraction of the municipal solid waste and the waste from agricultural and industrial production biodegradable, performed in dedicated centers. Treatment is always the same: through an aerobic biological process, (the first phase of degradation in many cases is anaerobic) the most degradable organic components undergo mineralization, i.e. the stabilization and the sanitation of the waste.

Compostable materials are: crop residues (straw, pruning, mowing ...); agricultural processing residues (husks, stalks, collars ...); by-products of wood processing; food waste originating from both domestic and agro-industrial; organic wastes originating from unsorted municipal solid waste (MSW); animal manure (manure and sewage); sewage sludge.

According to the matrices used in the composting process, it is possible to differentiate three kinds of process: green composting ligno-cellulosic (ligno-cellulosic waste); quality composting (various organic matrices selected); composting waste as such, (MW unselected at the origin)

The principal problem of the centralized composting centers that used MSW is that, together with the real organic fraction, there are more or less high percentages (depending on the degree of differentiation of the collection) of contaminants (metals, plastics, etc.) that are found later in the compost. For this reason, it is impossible to produce a good compost, maybe except in the case of a well-organized "door to door" collection, using the right containers and/or biodegradable shopper. Other problems are the high construction and exercise costs of the plants and the environmental impacts (transport and emission of malodorous substances).

Between the great industrial impact and the domestic one there is the community composting. They are small plants who accelerate the natural composting process. These plants are used to serve from few tens to some hundreds of households (families) or the necessity of a cafeteria, a hotel, etc. The proximity composting is practiced with the help of small electromechanical machinery in which the aerobic process stays and accelerates thanks to the air provided continuous and the mass is periodically turned (composting times declared from the producers are about 40 days). The shredding at the top of the process is almost always implemented because increases to equal conditions the aerated surface, and therefore the velocity of the process, and improves the mixing with a structuring.

The situation described before shows that the recovery currently practiced of the organic fraction of MSW implies a series of environmental and economic problems. Except from the home composting practiced in the garden, that in front of a certain user's burden, allows to dispose the organic fraction of MSW and to produce in most cases quality compost, both the centralized composting to community have a technology which is not mature yet. To give acceptable results from the point of view of the obtained product, the centralized composting presupposes at the top of the process a very significant separate waste collection and very expensive and efficient plants. Also for what concerns the economic and social problems, the plant must be built in a suitable place: not far from the production centers of compostable to reduce transport costs, but at the same time a place at a suitable distance from the most populated areas to reduce the environmental impacts. Community composting, instead, needs high cost of investment and implies however many burdens for the users. Also it isn't ecologically compatible in relation with the centralized composting and the domestic one: the cost, in terms of environmental impact (considering the necessary raw materials, energy, pollution), of a kg of compost obtained in this machinery, compared with the environmental cost of the same quantity obtained with alternative methods, is significantly higher.

While seeing in the last years a progressive increase in the quantity treated of the all organic fraction today produced (30% of all MSW), just a quarter, approximately the 8% of the total quantity of MSW, is transformed in composting centers and, of the products obtained, just a little part is used as fertilizer in agriculture; a good part is used as material to cover landfills.

As regards the existence of a vertical composter into the building and linked to the user's kitchens, inserted in an insulated external duct, no realization has been done until now, neither there are patents or patent applications in such sense. There are, however, also other patents that propose vertical pipes to vehicular compostable waste in a tanks at the base of the building where the processes of fermentation and maturation of garbage occur [D1)KR20120026230A (GK ECONOLOGY CO LTD) 19 March 2012]; vertical pipes for inducing compostable waste in bins at the base of the building where the organic substance is accumulated to be subsequently collected and transported at the composting centers [D4) - KR20080029937A (MOON S H) 3 April 2008 (2008-04-03)]; devices in which the waste from the apartments is collected to be crushed and to allow the fermentation through the adjustment of the water content with an agent added, the heating and the aerations: [D3) - JP H04 305285 A (TODA KENSETSU KK) 28 October 1992]. None of such patents however refer to a vertical pipe - composter inserted in a vane common to all condominium users as the one of this patent request. In fact, in the present invention a vertical pipe is expressly identified, that is a composter, i.e. a device in which certainly bio-oxidation reactions start until the stabilization of the food waste (this not happens in the patents before mentioned, where the pipe is only a way to vehicular garbage in the bins downstairs or in the community composter, as shown in KR20120026230A).

### 2.1.4 Purpose to be achieved

Purposes that the invention wants to reach, some in a short time, others in medium time and others in a more or less long time, are:

1. Replacing the centralized composting and community composting with the home - condominium composting;
2. Extending home composting to all families;
3. Producing a great quantity of excellent compost;
4. Practicing the home composting without so much work for the families, reducing the practical operations that user has to do, both as regards those already implementing the home composting of the garden refuse, and as regards those who implement the differentiation of MSW and even as regards those who bring in dumpsters the undifferentiated garbage shopper;
5. Practicing the home composting without additional economic costs, but rather taking deeply advantage of discounts on the fee for the disposal of MSW;
6. Reducing the total quantity of the garbage produced, in case composting was not matched to the total system of differentiation (existing buildings);
7. Deeply improving the disposal system of MSW through the follow actions:

   a. Upstream total separation of the products to be disposed of (paper, plastic, glass, metals, etc.);
   b. Total recovery and recycle of the various fractions;
   c. Increase, for the various types of garbage, of the time between one withdrawal and the other;

8. Reduce costs that Municipalities support for the disposal of the MSW through:

   a. The elimination of the transport costs of the wet garbage;
   b. The cancellation of the disposal costs of the wet garbage;
   c. The reduction of the garbage weight and volume;
   d. The simplification of the waste collection.

### 2.2.5 Detailed description of the invention - Analysis of the reached results

The idea at the basis of this invention is the execution of an home composting extended to all families realized in a composter specific for the house/family or for the condominium or for the restaurant or for the cafeteria, integrated in the house or in the building, i.e. a composter that works because is installed in the building and in which there is the complete sanitation of the food waste and the reactions of degradation and maturation of the compostable material start (in some types of composter they also end).

The innovative composter is a very cheap and simple system that applies a technology respectful of the humanity and the environment combining it with a consistent economy of management. The essential constructive elements are: an insulated duct vertically installed on the outside wall of the building, from the ground floor to the terrace or roof and in correspondence of the kitchens of the various apartments (1) - (2); another ventilated pipe externally delimited by a very dense grid or a nonwoven fabric put into the first duct (4).

The compostable will be discharged, directly from the kitchen of the various apartments (6) into the central perforated pipe, and it will arrive, slowed and turned, until the ground floor. During the fall degradation reactions will begin and will be completed in the tank (or part of the pipe) situated at the ground floor or in correspondence of the basement.

The air that rises from below for chimney effect and is ejected from the top of the pipe, in correspondence with the flat roof or roof, after any possible bio-filtration, assures aeration naturally.

It is possible to build composter for a single user (a family also formed by an only person) or for tens of families. The principle of operation is the same; what changes are the dimension of the constituent part of the machinery and the number of the accessories that rise with the number of users.

Before describing more in detail the constituent parts of the composter, in order to understand better how it works and the phases of the composting process that happens in it, it is necessary to explain some concepts about the biological dynamics of the composting process. These, as it has just been said, are determined and/or influenced by the values of some parameters, whose optimal range (conditions for a more fast composting) is: C/N rate = 25 - 30; humidity = 55% - 63%; oxygen > 10% in the active phase of degradation; pH = 6,5 - 8,5; temperature = 36 °C - 60 °C; bulk density = 550 - 650 kg/mc. Instead the compatibility range (conditions for a composting process obtained in more time) is: C/N rate = 20 - 40; humidity = 45% - 65%; oxygen = 10% in the active phase of degradation; pH = 5,5 - 9; temperature = 26 °C - 70 °C; bulk density < 800 kg/mc. However, out of this range, it's not sure that the process will not happen, but it develops slowly and/or with the malodorous emission, because the composting is a process which is realized in a great range of conditions, also significantly different from the optimal ones.

The composter subjected to the request of patent is extremely flexible so it can be designed for many users and, with the same number of residents served, with various variants and using different materials; also it contains a certain number of monitoring and regulation systems or could not contain any.

In it the entire composting process is designed, i.e. we choose *a priori* times and developments of the various phases: minimum times, shorter or longer times, maximum time compatible with the quantity treated and the geometry of the same composter. Depending on the case, we have a more or less rigorous control of the various phases. Precisely, the government system of the process will be continuous when the measures of the parameters that influence the velocity of degradation are constantly taken (temperature, humidity, oxygen consumption, etc.) and in function of time of the chosen process, modified with regulation systems (modification of the air flow, opening of sprinklers or humidification or jets of steam, preheating the air with electric heaters, etc.) more or less automatically. It's obvious that such composter has reduced composting times and also a greater cost for the presence of the monitoring and regulation systems. A well-made composter is the ideal for a condominium with a great number of users, who can share the increased cost. In most cases instead it is possible to use very simple and cheap composters, without regulation systems, in which, however, processes happen correctly, only in a longer time.

Generally, considering some basic conditions it is possible to calculate the time of parking of the compostable in the duct.

The time that the material uses to fall through the duct is greater or equal to that required because the early bio-oxidation reaction starts, but the invention proposed does not exclude that, increasing the diameter of the pipe and therefore stretching the time in which the material stays in the vertical duct, it's possible to obtain mature compost out of this.

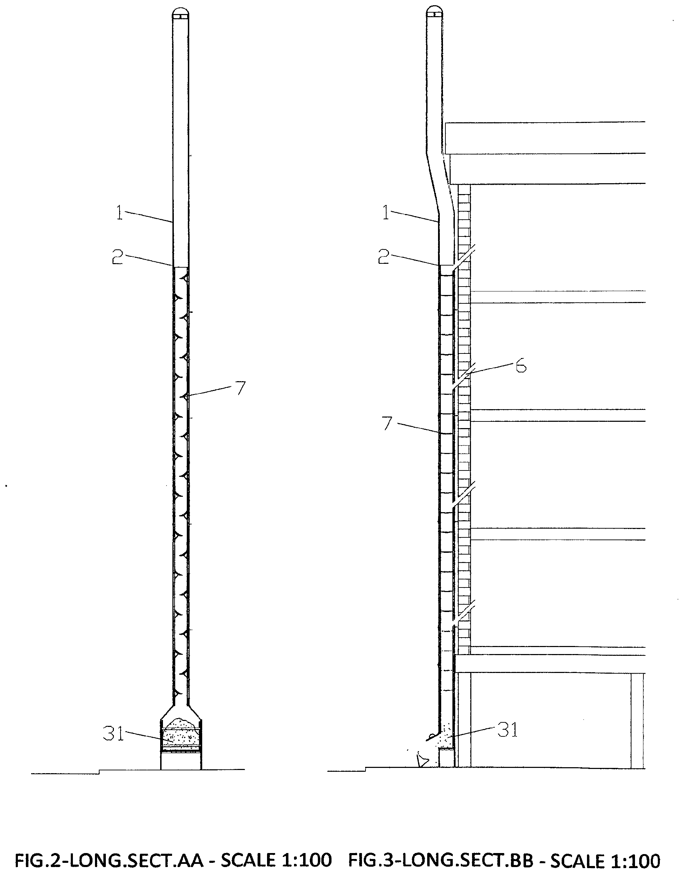

Taking as a reference the simplest composter, which is also one in which the material stays less, after it's shown an approximate calculation. Considering that the necessary time to let the composting react is variable depending on the boundary conditions (temperature, humidity, waste characteristics, etc.) we refer to medium condition, considering that each person produces on average about 0,2 kg of garbage in one day. In the simplest type of composter, reported in Figg. 2-3, each part related to the single floor contains from 4 to 10 containers in which the material is stirred (this is one of the characteristics that it's possible "to design"), also, on each container can stay a maximum of 3 kg of waste. Therefore we have that, with reference to a family composed by 4 components, each apartment produces about 0,8 kg/d of waste, so, on each container, the food waste stays for about 4 days:

$$\frac{3 \; ^{kg}/_{contenitore}}{0,8 \; ^{kg}/_{d}} \cong 4 \; ^{d}/_{contenitore}$$

To reach the bottom of the pipe, considering the most disadvantaged situation, i.e. the first floor, there are on average 7 containers, so:

$$4\,{}^{d}\!/_{contenitore} \times 7\,contenitori \cong 28\,giorni\cdot$$

From the calculation therefore is obvious that, also considering the composter in which the material stays less, the bi-oxide reactions (that happen in the first 2 - 3 weeks) are activated in the pipe that is of course a composter, although in combination with the tank at the base in some versions.

Since the principal purpose of the composter is recovering the wet garbage in the place where it is produced, the fundamental condition to guarantee a fast and efficient course of the process is that to maintain the presence of the oxygen in the matrices in transformation at compatible level with the aerobic microbe metabolism. It follows that it's possible to realize cheap composter ensuring *a priori* a surplus of air circulating in the cavity, i.e., depending on the natural draft of the chimney (proportional to the height difference between the top of the pipe and the base), opening more or less the finned surface situated at the base.

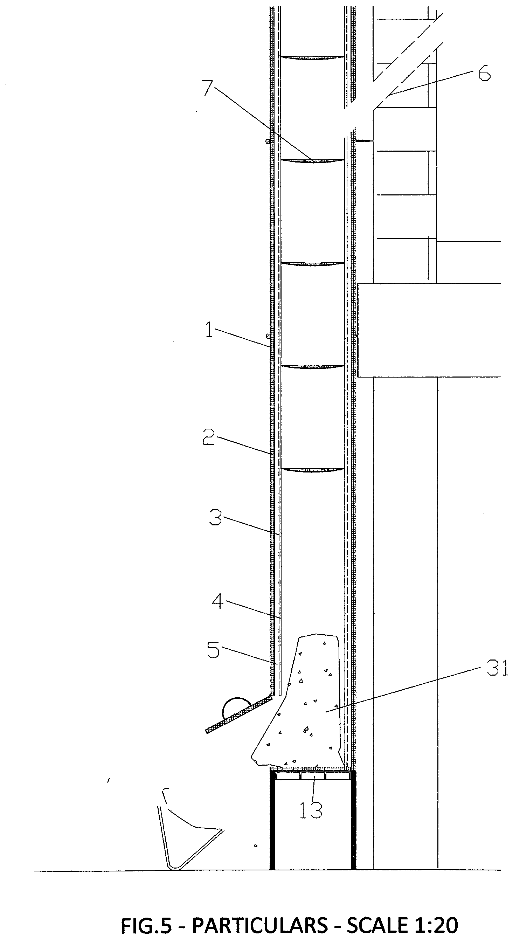

The central pipe will be built with a number of different holes along the vertical development which are greater in the upper side where there is the active phase of the process, lower in the lower part; still minor are in the zone where there are the maturation reactions. In addition, the expensive system of humidification and/or vaporization can be replaced by cheap air humidifiers. For example in the fig. 5 there is a simple system (13) in which it is only necessary to add a little water occasionally, when it ends, in the containers; it is realized with a small container with a little sponge with holes through which the air passes so that in the transition it is saturate with water assuring in such a way the quantity of humidity compatible with the development of the process.

It follows that, with simple and cheap few interventions or addition of devices a high efficiency of the process is guaranteed and the environmental troubles are minimized (erased).

Ultimately, the flexibility of the composter is linked tot the verticality of the same, that allows to obtain naturally, for chimney effect, with simple regulations, the aeration and the humidification within optimal ranges, or it's possible to set with an excess of aeration, even supplemented by simple humidifying devices, to avoid the regulations. Also, the verticality allows to harness gravity to the overturning and the automatic mixing of the material, without no user intervention and, not least in terms of importance, the direct connection with the user's kitchen. This last aspect represents the basic condition to select in theory also the 100% of the domestic organic substance as it's produced and before mixing it with the other kinds of waste. In fact, all the organic substances that you should throw are discharged without any burden, directly in the composter, not in the trash.

Below the fundamental parts of the composter subject of the patent application are described more in detail, its functioning and the process steps that take place in it, referred to some examples supported by the numerous drawings attached. We reiterate one more time that the examples are only indicative because, in the multiplicity of the possible approaches, the project choice may vary depending on the different boundary conditions: number of users, process times, location, types of treated materials, choice if construction materials, costs, etc.

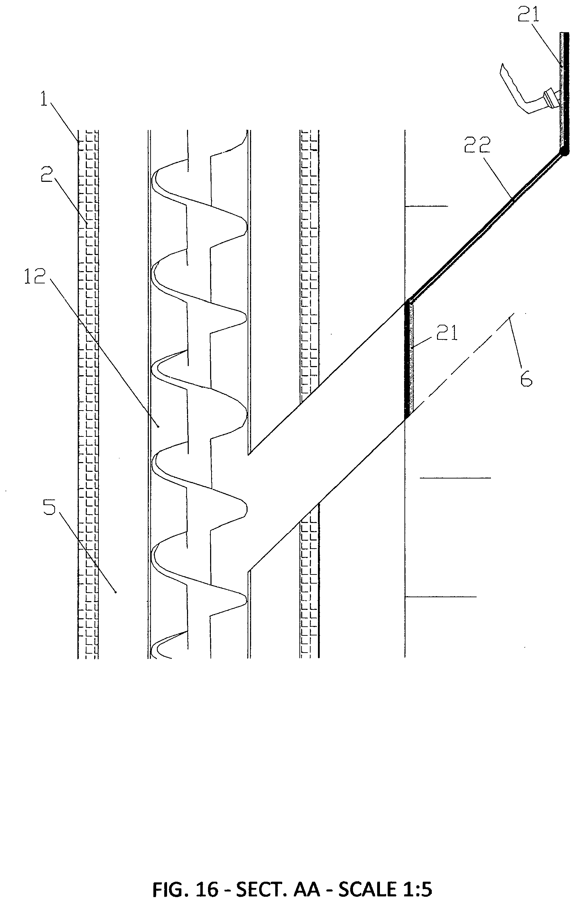

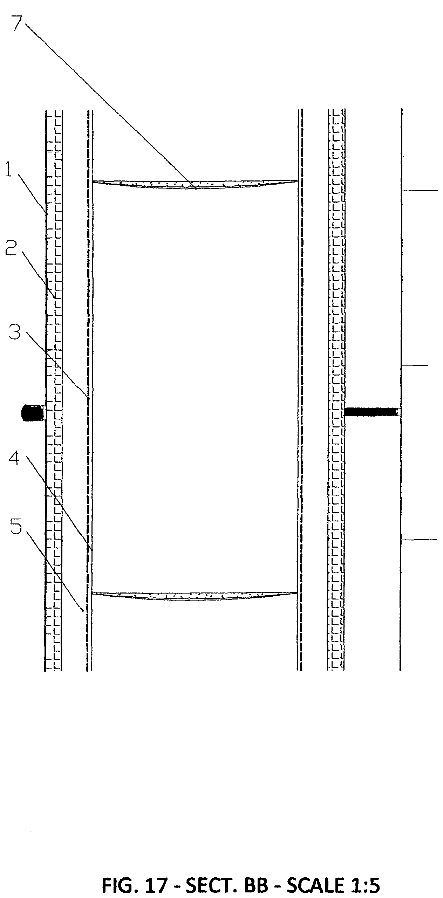

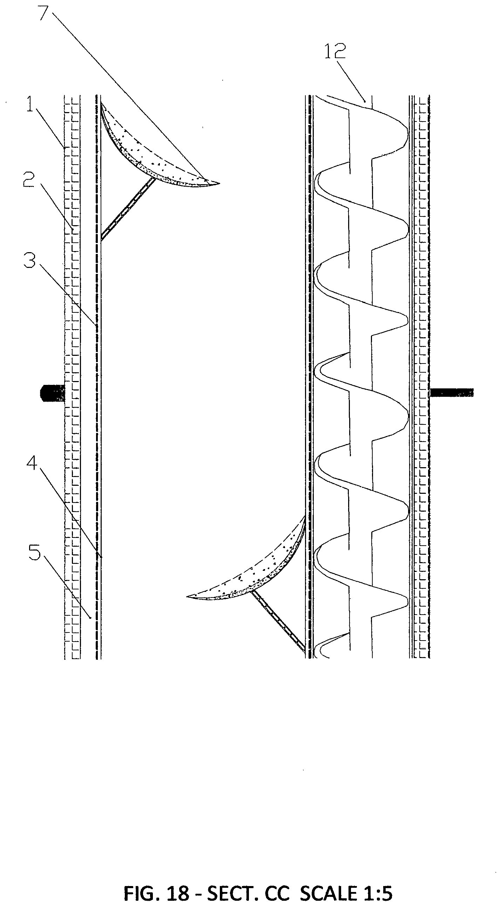

The composter is physically linked through a duct with the different kitchen of the users, but there aren't smells or little animals crossing the duct until the kitchens of the apartments, either because the composter is slightly depressed compared to apartments for the chimney draft, and because the supply duct that adds the organic material to the composter is equipped with double seal with alternate opening (see fig. 16).

Since the organic material which will be introduced in the composter will be exclusively constituted by food waste deriving from the food preparation and the remains of meals, it is free from any pollutant or contaminant or junk substance; for this reason the compost that will be produced will be of high quality and, considering the amount that can be produced, the same will replace completely the most used chemical fertilizers today, with a lot of environmental benefits. Also, in some cases, you may decide to exclude food waste as meat or fish that might cause some inconvenience (longer composting times, smells, presence of animals).

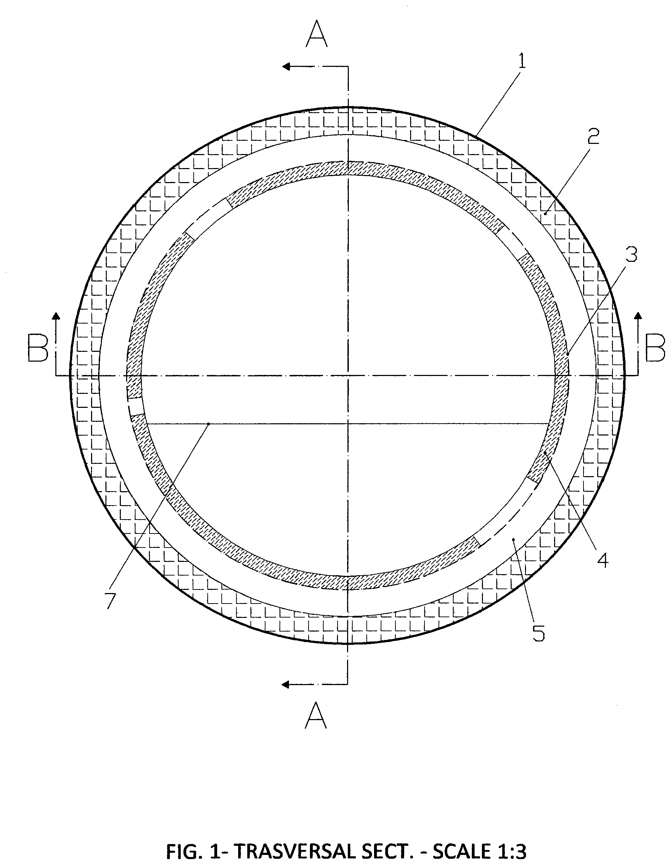

At last, the reduced structure capacity of the food waste constituted principally by rests of fruit and vegetables and the high fermentation of the same, in addition to requiring a fast start treatment before the start of the putrefactive phenomena, suggest a possible pretreatment: trituration/defibering, mixing and homogenization with the addition of special structures which would also provide an optimal chemical and physical texture to the compost. Therefore in the kitchen of the house or the restaurant one can expect a small appliance: a container with a manual or electric agitator and a domestic mixer incorporated. Food waste will be put in the mixer and from here, it will fall in the containers below. The shredder function is only to provide an optimal dimension of the food waste to the start and the acceleration of the biological processes of mass. In addition, if one decides to have the compost longer it isn't necessary. At the end of the meal or at the end of the day or also after few days, all the mashed material accumulated in the container can be mixed with a structured (sawdust, remains of pruning of the garden, pellets, pieces of paper, etc.), so as to achieve a semifluid physical consistence, and discharged in the pipe, that directly leads it to fall in the composter. This (fig. 1 - 2 - 3) consists of an insulated external pipe (1 - 2) with the fundamental function to assure the air flow from bottom to top for chimney effect; an internal pipe with small diameter (4) within which the compostable moves from top to bottom, counter current at the air flow. Between the external surface of the aerated pipe and the internal surface of the insulated pipe there is something within which the air circulates from the bottom to the top, oxidizing the material. The pipe length is variable with the number of floors (slightly higher at the height of the entire building), while the diameter varies depending on the users/families served or the compostable quantities.

The external pipe that also has the function to insulate thermic, can be formed by various more or less expensive materials: stainless steel, copper, galvanized steel, plastic and even blocks of lightweight concrete or other material making up the chimney type "shunt". The internal insulator (2) can be fiberglass or rock wool or polyurethane or even a spongy tissue capable of retaining water and transfer it in dry periods, etc.

The internal pipe is a pipe with holes in non-oxidizing material (4), plastic, stainless steel, etc., covered by a dense grid or a drainage nonwoven fabric (3), but at the same time it is breathable or even a breathable spongy tissue.

The lower part of the pipe, where the maturation of the compost occurs, contains few holes, (oxygen required 1% - 5%), while the upper part where the bio-oxidation reactions occur (oxygen required 5% - 15%) is characterized by more holes.

Inside the upper pipe, alternatively and with a variable distance function of time composting that one wants to obtain, surfaces and elements with different shapes that carry out the function of slowing down and turning the material as it descends in the aerated pipe are disposed.

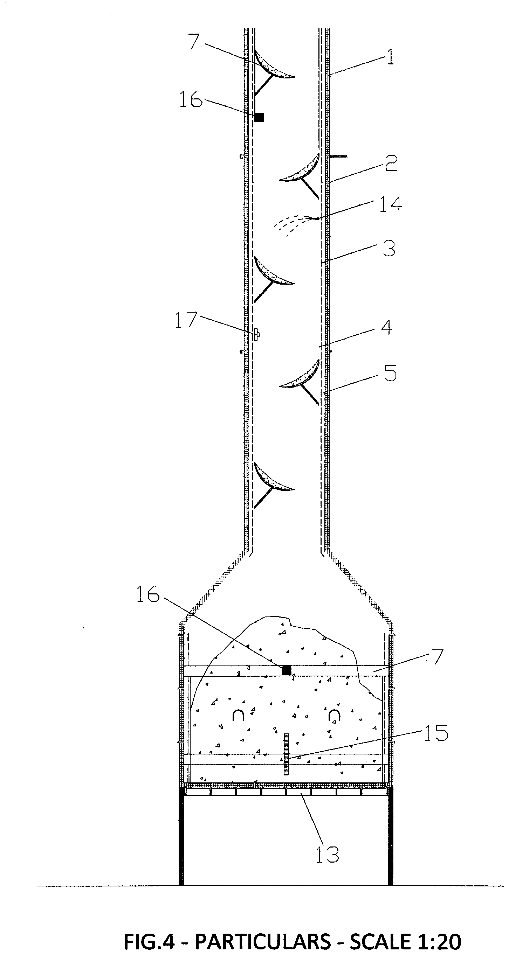

An example, reported in the drawings attached, is to use curve spoon shaped surfaces inclined inwards (7). The concave part of the spoon or a pocket inserted in the underlying part of the spoon, is at the beginning partially full of mature compost to trigger the degradation process. The presence of the inclined spoons in the pipe, that can be also replaced by simpler profiles, such as turned U-profiles (fig. 4) or also more complex structures helical or screw fixing, slows the material fall and naturally and automatically determines the disaggregation, the turning and the aeration of the same; the material that falls on a spoon stays on it and accumulates more and more until the resultant of the gliding forces exceeds that of the stabilizing forces and the material falls on the spoons below. During the permanence on the curve inclined surfaces the reaction of degradation starts so the material that arrives from the higher floors will have a more stringent degree of mineralization, while that from the lower floors will be less significant. However, in the successive turnings, the upper and the lower materials will mix, distributing in an uniform way inside the mass that will stay into the lower pipe or in the tank (29), in which the reactions of maturation occur, both the quantity of microorganisms and the parts of material less composted, favoring further degradation processes.

Aeration is automatic for chimney effect and it's regulated opening more or less the finned surface present in the lower part of the pipe (18), so as to adjust the optimal air flow for the development of the reactions and not to create malodorous compounds that would lead to emission of bad odors at the top of the chimney. To increase the air flows, the finned surface can be also integrated by an aspirator located at the top (32). The more or less pronounced volume restriction of such finned surface determines also a depression into the pipe that excludes the diffusion of bad odors in the apartments. In each case, as said, it is best to physically separate the kitchen of the apartment from the composter with a double hermetic closing system with alternating opening (21) - (22) laid down in the pipe feeder which means that there is never the direct contact with the composter, i.e., when an opening is open the other must be necessarily closed (fig. 16).

The system just illustrated is that referred to a building with few floors and it's very flexible because it's possible to choose *a priori* times and ways of carrying out the different phases.

The composter is managed by a single operator that dedicates few hours for each composting process (time of the compost withdrawal), that can vary from few months to a year and more.

The compost produced can be used for the condominium garden or for the condos flower pots or sold or given for free to anyone who has a vivarium or a vegetable garden (in this last case the manager could play free withdrawal operations and the management of the composter).

In some cases, always for few users, it can be very cheap to use a composter in which all the material is discharged directly on the ground floor and here to have the reactions of degradation and maturation in one (or two) tanks situated at the ground floor: the upper part (the superior tank), mostly aerated, in which the phase of the oxygenation and bio-stabilization takes place; the lower part (the lower tank) where the phase of maturation takes place. These containers can stay higher than the floor decking to use both the natural aeration determined by the air circulation for chimney effect and the material fall for gravity effect in the compost loading on the means of transport, or they can stay on the ground. The internal aerated pipe may be missing and the external pipe, in this case of smaller section, could have the function of air draft and the function of compostable driving.

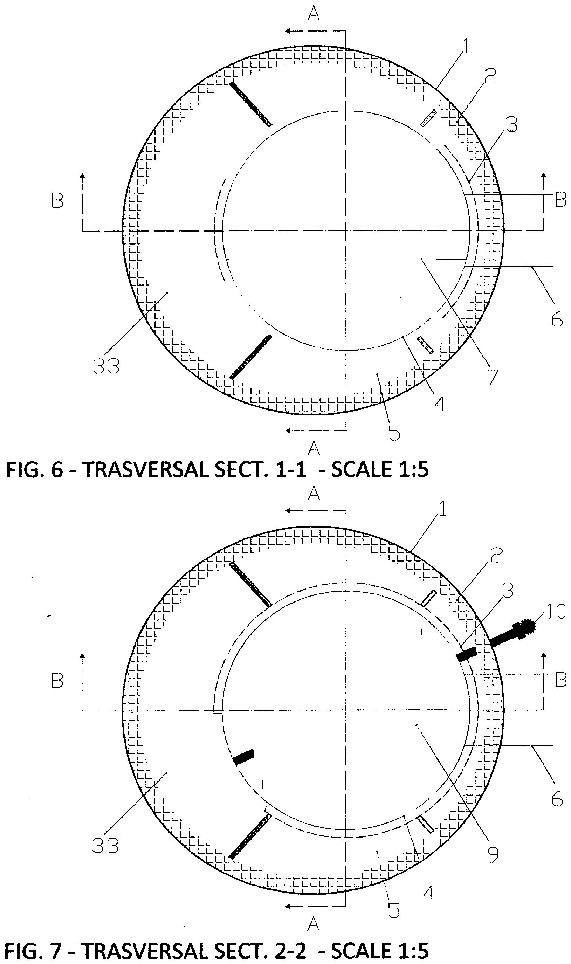

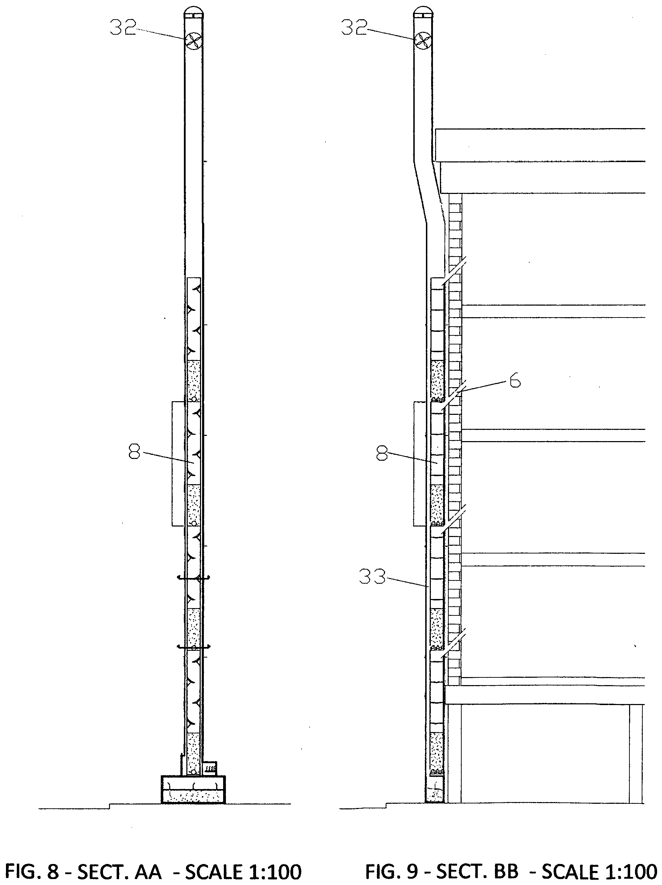

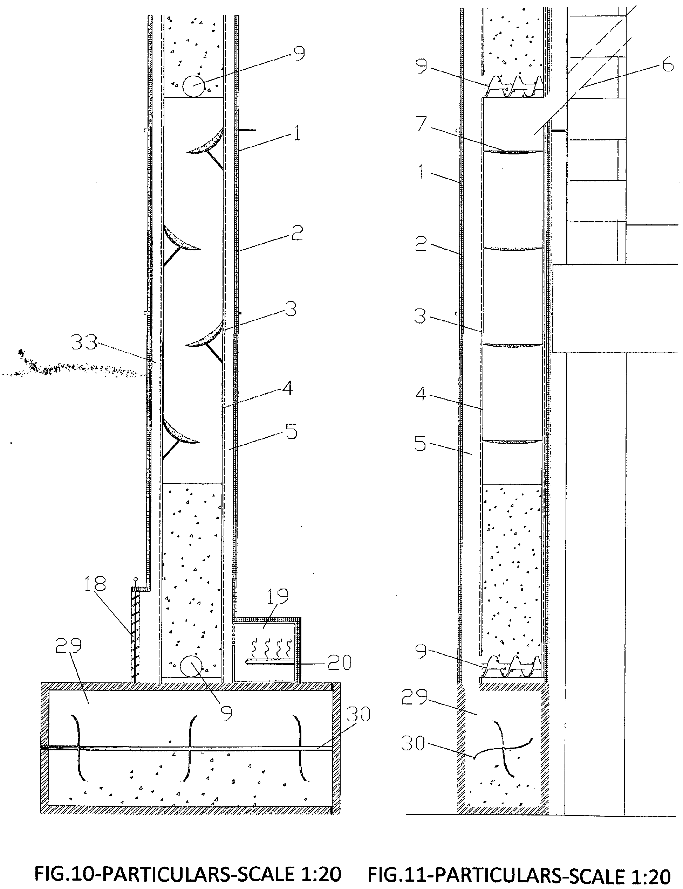

The most economical system (fig. 6 - 7 - 8 - 9 - 10) usable, both in case of few users and in case of skyscraper with tens of plans, is the one that implements the phase of bio-stabilization in the aerated pipe divided for the different users, at different levels. Precisely, the central aerated pipe is divided in compartments of a height equal to the distance of the floors (generally 3,0 m) that go from the upper part of the feeding pipe to the upper part of the feeding pipe of the apartment below (fig. 8 - 9). This septum contains, for the length of 1,6 - 2,0 m, the spoons to the slowdown, the mixing and the aeration of the material, and for the length of 1,0 - 1,4 m is free of spoons. The compostable produced by the single family, after being triturated and mixed, is introduced in the feeder pipe and falls in the bio-stabilizer pipe. Here it stays on the spoons, falls, turns and starts the composting process. After a certain time, and after that have been completed the reactions of mesophyll oxidation have been completed, it arrives in the pipe below, the one without spoons, and stays in optimal condition for the occurrence of the active phase of bio-transformation, with a mass temperature around 55 °C for all the time, except 2 - 3 days when temperature increases to 65 °C, favoring in such ways the correct and rapid sanitation and bio-stabilization.

When the Static Respiration Index (SRI), that represents the residual fermentation of the material during the sanitation and the stabilization is on very low values and lower than 500 (mgO$_2$/(kg SVssh), we are at the end of the process of bio-stabilization and the young compost is ready to fall, through a manual or an electric cochlea turner (9), moved from the single apartment which belongs to such compartment or from a centralized system that commands all the cochlea (10) or even with an automatic discharging system that uses the weight of the material above, through the interspace, in the tank situated little higher than the decking of the ground floor or the basement floors, where the material stays in optimal conditions to complete the maturation phase. So periodically, every three months or six months or a year, it is taken to be used as great (it doesn't contain any contaminant) fertilizer for the condominium garden or the condos flower pots or the municipal gardens or used in agriculture.

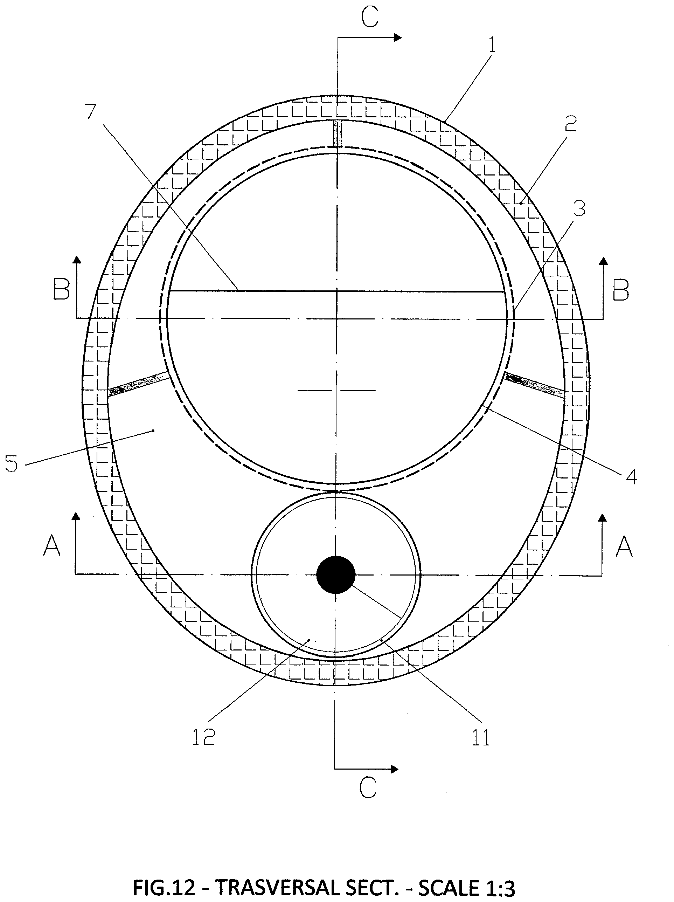

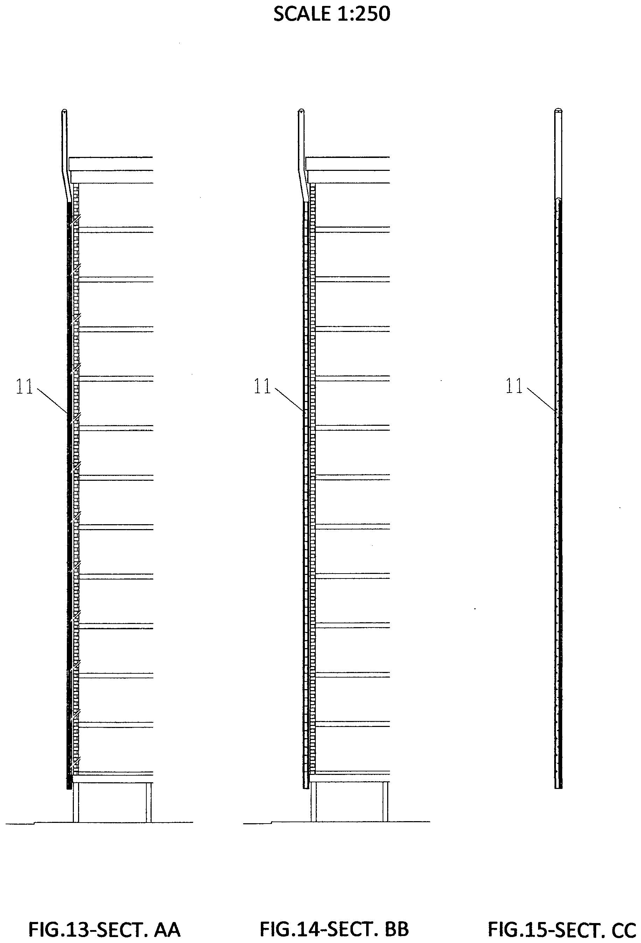

In the case in which the building is higher than 8 - 10 floors, instead of increasing the diameter of the pipe, it is convenient to provide a lifting system, for example at cochlea (12) which leads the compostable from the different floors to the summit of the last floor (fig. 12 - 13 - 14 - 15). Here it can undergo a centralized trituration and homogenization before to be poured in the composter, or single user in his apartment can carry out the trituration and the mixing with the structuring. In the case of a system with lifting, the compostable is confined in the central aerated pipe that, once fixed the time for the compost withdrawal, is designed with a diameter such as to contain all the material in over a certain franc.

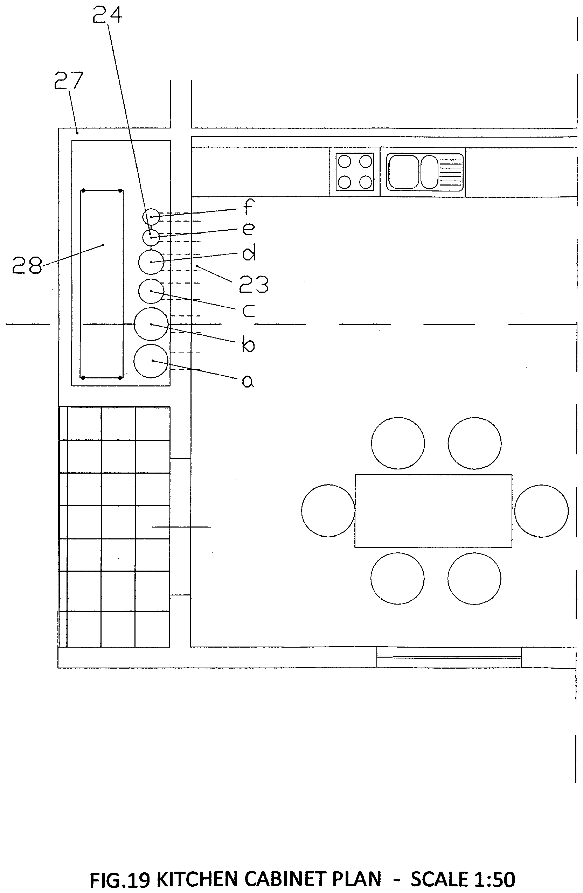

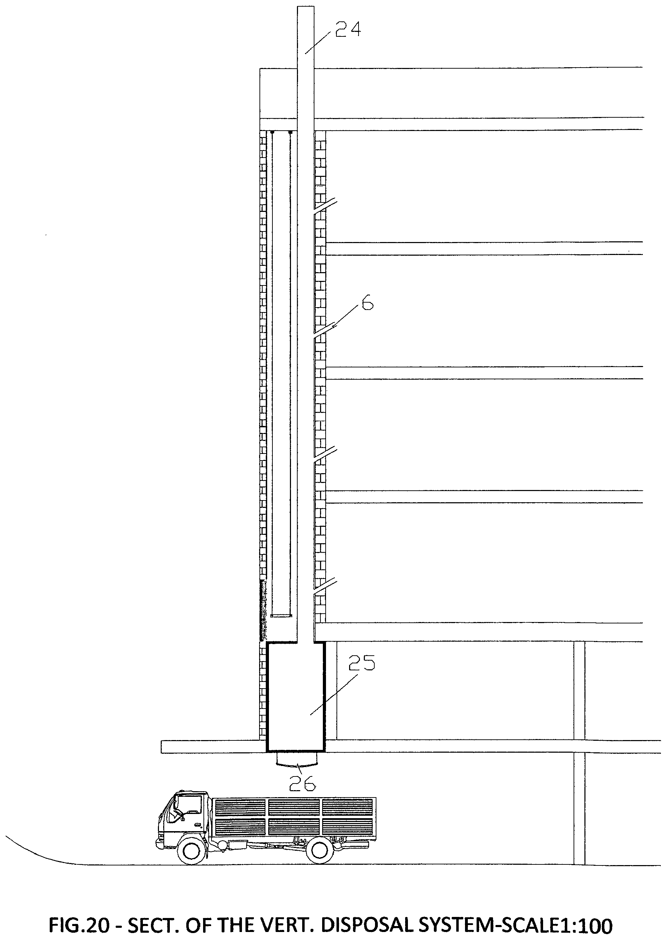

The realization of the composter will add great changes in the system of the MSW disposal, because in theory household waste will not be produced but the differentiation and the recovery of the waste that constitute the raw material of the recovery plants will be made , i.e. the fascinating idea that the house will no longer produce waste but food for the recovery and recycle plants will become true. And all this with environmental benefits and a great reduction of costs, nuisances and burdens supported by the single citizen and the public entity: no longer waste transport in plastic shoppers to boxes or to containers for the differentiation recovery, but upstream separation of the different products before they're removed and therefore before they become waste. Paper, plastic, metals, glass, etc., after the use or when it is necessary to throw them, instead of throwing them in the common boxes on in the containers for the differentiation recovery, are inserted in dedicated compartments for each kind of waste (24), situated in the kitchen and linked through duct to containers or vane (25) installed/realized at the ground floor, whence are periodically withdrawn (fig. 19 - 20). Also this last phase can be realized with great advantages: no more machines include hydraulic system of lifting that lift the waste box to discharge its content thanks to the work and/or the help of two workers (very often they operate in unhealthy and unsafe conditions), but direct discharge of the various typologies, however non-putrescible, in the chests of vehicles. The discharge can be obtained very easily positioning the vehicle under the waste manhole and open it, maybe electronically thanks to a remote control actuated by a single operator (same driver of the vehicle) (26).

Such scenario presupposes a modification of the constructive system of the new residential buildings and the adaptation of the existent ones. New residential buildings must be designed so as to contain, architectonically integrated, similarly to masonry chimneys, technical vertical vanes dedicated, usable both for the transport, to fall, of the different kinds of waste (paper and cardboard, plastic, glass, metals, etc.) from the kitchen of the apartments to the boxes below, and for the allocation of efficient composters. In figg. 19 - 20 is represented an example of dedicated vane in which are allocated all the ducts for the transport of the different commodity fractions and the same composter is represented. In this case also a vertical transport system (elevator) usable both for the installation of the transport duct and for the successive operations of maintenance is represented.

The higher costs of construction of the new homes, for the installation of such systems, are widely repaid by the elimination of the municipal waste fee; rather the withdrawal of the homogenous fractions of the secondary materials by hijack to the recovery centers, such as paper, plastic, glass, metals, etc. will be done by paying large sums of money, considering actual prices and considering that such products will be free from unwanted substances.

Existing residential buildings, instead, or the ones seat of cafeterias, restaurants, etc., must be adequate, making a not excessive expense and in little time depreciable thanks to reductions obtained on the municipal waste fee, with the installation of external efficient composters allocated on the buildings wall and choices each time by the users depending on the number of users and expected time for composting and costs that one wants to support.

For some existing buildings there may be also the possibility to install externally ducts and containers below for the disposal of the other fractions or to build some accretions within inserting such ducts.

The benefits that the invention of the vertical composter will bring are environmental, social, economic. No more landfills and/or incinerators, no more waste shoppers and street boxes or eco-centers where the citizen must lead waste; no more campaigns to raise public awareness to execute the differentiation recovery; no more expensive plants that has to execute expensive operation of waste pre-treatmemt; no more biodegradable shoppers; no more chemical fertilizer; no more pollution of soils and waters; no more bad odors, etc., but the almost total elimination of the home waste that become homogeneous commodity products, i.e. secondary materials to use in recovery centers and reuse to obtain products usable by men.

**Claims**

1. Home-pool composter for the transformation of the organic fraction of municipal solid waste, integrated into the building and **characterized by** a vertical development, configured to provide a direct connection with the rooms and kitchen of the apartments on different floors, to introduce the compostable material directly from the place where it's produced; the transport, the handling and automatic turning by gravity also allowed by fixed obstacles (7); the use of the stack effect for oxygenation-wetting of the material and the conveyance, upward, away from people and things of odorous and gaseous emissions, which may be treated with bio- filter, wherein the composter consists of: an insulated duct vertically installed on the outside wall of the building, from the ground floor to the terrace or roof (1) - (2), open to the air passage at the superior ending where there is a chimney and at the bottom where there is a finned surface with variable opening (18); another pipe, concentric to the first, ventilated with a different number of holes along the vertical development (4), wherein the lower part of the pipe, where the maturation of the compost occurs, contains few holes, while the upper part where the bio-oxidation reactions occur is **characterized by** more holes and defined externally by a grid or a nonwoven fabric or a breathable spongy tissue (3) put into the first duct and separated by the same through an interspace (5); retarders, fixed containers and folding containers for weight effect, configured to allow the parking in the tube - composter for at least 28 days (7); and feed ducts of the organic substance from the kitchens of the various apartments within the pipe aerated (6) possibly with double hermetic closing system with alternating opening (21 - 22).

2. Composter according to claim 1 **characterized by** the insertion of mobile or fixed systems included in the aerated pipe for the slowing down and turning of the material (7) and to accelerate the composting process, such as simple and fixed obstacles inverted U-shape, more complex helical structures able to rotate or curve surfaces having a teaspoons-shape inclined inwards with the presence or absence of a pocket in which the mature compost is previously put to accelerate the degradation process of the organic substance.

3. Composter according to any one of claims 1 or 2 integrated by a system of air regulation, such as fan and/or aspirator (32).

4. Composter according to any one of claims 1 to 3 integrated by humidity control systems, such as humidifiers (13) and/or sprayers (14).

5. Composter according to any one of claims 1 to 4 integrated by systems for adjusting the temperature, such as steering jets of hot steam conveyed by the extractor fan of the users kitchen (19) and/or electrical resistances (20).

6. Composter according to any one of claims 1 to 5 **characterized by** a system that implements the step of bio-stabilization in the aerated pipe separate and independent for the various utilities-families at the various levels (8), while the phase of maturation is centralized in the same container (29), situated at the duct base, optionally provided with turner (30) which comprises, after expulsion with systems (9) driven by crank mechanisms centralized or operated by the family member (10), the materials partially mineralized of the various planes, or can be completed in a centralized composting center in which materials are periodically transported from the container below the composter, where the same consists of: an insulated duct vertically installed on the outside wall of the building, from the ground floor to the terrace or roof (1) - (2); another ventilated pipe, decentralized with respect to the outer casing (4) externally defined by a grid or a nonwoven fabric or a breathable spongy tissue (3) put into the first duct and separated by the same through an interspace (5); fixed retarders and shakers (7); feed ducts of the organic substance from the kitchens of the various apartments within the pipe aerated (6); a single duct (33), along the entire height of the casing, in which a cochlea system (9) commanded by the user (10) or an automatic discharge system that use the weight of the material above, discharges the composted or partially composted material to the various floors in order to reach the reservoir (29) at the casing bottom.

7. Composter according to any one of claims 1 to 6 **characterized by** lifting and mixing systems of compostable produced from the various floors to the top of the last floor (11) - (12), that consists of: an insulated duct vertically installed on the outside wall of the building, from the ground floor to the terrace or roof (1) - (2); another ventilated pipe (4) externally defined by a grid (3) put into the first duct and separated by the same through an interspace (5), to have the relapse and the mixing of the material; fixed retarders and shakers (7); feed ducts of the organic substance from the kitchens of the various apartments within the lifting pipe (11); pipe (11) with a cochlea inside (12) to lift the compostable from the various floors to the top of the duct.

8. Composter according to any one of claims 1 to 7 integrated by process monitoring system, such as thermometers (15), hygrometers, (16) cameras (17), electronic noses.

9. Use of the composter according to any one of claims 1 to 8 in a procedure, following the recovery process of putrescible municipal waste obtained with the product described in any one of claims 1 to 8, of disposal of other fractions of municipal solid waste resulting lack of organic matter, from the bins of differentiated or undifferentiated from the dumpster, **characterized by** less frequent and periodic retreats without problems, such as odors, unhealthy environment, and with a better quality and quantity of other types of waste that will be launched to networks of restoration and enhancement.

10. Use of the composter according to any one of claims 1 to 8 in a procedure for disposal of municipal solid waste, following the recovery process of putrescible municipal waste obtained with the product described in any one of claims 1 to 8, **characterized by** differentiation and separation with total removal of the various fractions of "secondary raw materials", i.e. wet, paper, plastic , glass, directly from the kitchen of the house as they are produced, by inserting different intake pipes (23) and after possible pretreatment of shredding - dehydration -volume reduction to be carried out in a dedicated household appliance installed in the user's kitchen, in separate ducts for the various fractions (24), named as follow: pipe (a) for food waste, pipe (b) for other/undifferentiated, pipe (c) for paper and cardboard, pipe (d) for plastic, pipe (e) for glass, pipe (f) for metals; the abovementioned separate ducts opening into bins or containers easily emptied on the ground floor or basement floors (25 - 26) and they are installed outside the building or housed in special rooms architecturally integrated in the building (27), possibly arranged with lifting systems for the laying and the maintenance of the ducts themselves (28).

**Patentansprüche**

1. Kompostierer für den Hauseinsatz für die Umwandlung des organischen Anteils fester Abfälle, in das Gebäude integriert und charakterisiert durch einen vertikalen Aufbau, so konfiguriert, eine direkte Verbindung zwischen den Zimmern und der Küche der Wohnungen in verschiedenen Stockwerken herzustellen, um das kompostierbare Material direkt von dem Ort zuzuführen, wo es produziert wird; der Transport, die Handhabung und automatische Drehung durch die Schwerkraft, auch möglich bei festen Hindernissen (7); die Verwendung des Kamineffekts für Sauerstoffversorgungs-Befeuchtung des Materials und den Transport nach oben, weg von den Menschen und Dingen geruchs- und gasförmiger Emissionen, die mit einem Biofilter behandelt werden können, wobei der Kompostierer hieraus besteht: einem isolierten, vertikal an der Wandaußenseite des Gebäudes installierten Luftkanal, vom Erdgeschoss bis zur Dachterrasse (1) - (2), offen für den Luftdurchgang am oberen Ende, wo es einen Kamin gibt, und an der Unterseite, mit einer berippten Oberfläche mit variabler Öffnung (18); ein weiteres Rohr, konzentrisch zum ersten, ventiliert mit einer unterschiedlichen Anzahl von Löchern entlang des vertikalen Aufbaus (4), wobei der untere Teil des Rohres, wo die Reifung des Komposts stattfindet, wenige Löcher enthält, während der oberere Teil, wo die Bio-Oxidations-Reaktionen stattfinden, durch mehr Löcher charakterisiert ist, und extern gehalten wird von einem Gitter, einem Vliesstoff oder einem atmungsaktiven Schwammgewebe (3), hineingesetzt in das erste Rohr und getrennt durch einen Zwischenraum (5); Verzögerer, feste Behälter und klappbare Behälter durch den Gewichtseffekt, so konfiguriert, den Verbleib im Rohr-Kompostierer für mindestens 28 Tage zur ermöglichen (7); und Zuführrohre der oganischen Substanzen von den Küchen der verschiedenen Wohnungen innerhalb des belüfteten Rohres (6), eventuell mit doppeltem hermetischen Verschlusssystem mit wechselnder Öffnung (21 - 22).

2. Kompostierer nach Anspruch 1, charakterisiert durch das Einfügen von beweglichen oder festen Systemen innerhalb des belüfteteten Rohres, für die Verlangsamung und die Drehung des Materials (7) und um den Kompostierungsprozess zu beschleunigen, wie einfache und feste Hindernisse, invertierte U-Formen, komplexere spiralförmige Strukturen, die eine Rotation ermöglichen, oder Kurvenoberflächen mit einer nach innen geneigten Löffelform, mit einer vorhandenen oder fehlenden Tasche, in welche der reife Kompost zuvor gelegt wird, um den Abbau der organischen Substanz zu beschleunigen.

3. Kompostierer bezüglich einem der Ansprüche 1 oder 2, integriert in ein System der Luftregulierung, wie Lüfter und/oder Absauganlage (32).

4. Kompostierer bezüglich einem der Ansprüche 1 bis 3, integriert in ein Feuchtigkeits-Kontrollsystem, wie Luftbefeuchter (13) und/oder Sprüher (14).

5. Kompostierer bezüglich einem der Ansprüche 1 bis 4, integriert in Systeme zur Adjustierung der Temperatur, wie durch die Dunstabzugshaube der Küche transportierte Heißdampfströme (19) und/oder elektrische Widerstände.

6. Kompostierer bezügliche einem der Ansprüche 1 bis 5, charakterisiert durch ein System, welches den Schritt der Bio-Stabilisation im belüfteten Rohr separat und unabhängig für die unterschiedlichen Familienanlagen implementiert (8), während die Reifephase im selben Behälter zentral stattfindet (29), gelegen an der Steigrohrbasis, optional ausgerüstet mit einem Wender (30), welcher nach Austrieb durch mit Kurbelmechanismen angetriebenen Systemen (9) zentralisiert oder von einem Familienmitglied angetrieben das teilweise mineralisierte Material der verschiedenen Ebenen enthält, oder es kann vervollständigt werden in einem zentralisierten Kompostierzentrum, in welches Materialien aus Behältern unterhalb des Kompostierers periodisch transportiert werden, welche bestehen aus: einem vertikal installierten und isolierten Rohr an der Außenseite des Gebäudes vom Erdgeschoss bis zur Dachterrasse (1) - (2); ein weiteres belüftetes Rohr, dezentralisiert bezüglich der äußeren Hülle (4), extern gehalten von einem Gitter, einem Vliesstoff oder einem atmungsaktiven Schwammgewebe (3), hineingesetzt in das erste Rohr und getrennt durch einen Zwischenraum (5); feste Verzögerer und Schüttler (7); Steigrohre für organische Substanzen von den Küchen der verschiedenen Wohnungen mit dem belüfteten Rohr (6); ein einzelnes Rohr (33), entlang der gesamten Höhe des Gebäudes, in welches ein Schneckensystem (9), betrieben durch den Nutzer (10) oder ein automatisiertes Entleerungssystem, welches wiederum das Gewicht des darüberliegenden Materials nutzt, das kompostierte oder teilweise kompostierte Material auf die verschiedenen Ebenen entleert, um das Reservoir (29) unten am Gebäude zu erreichen.

7. Kompostierer bezügliche einem der Ansprüche 1 bis 6, charakterisiert durch Hebe- und Mischsysteme für Kompost, produziert von den verschiedenen Etagen bis zur Spitze der letzten Etage (11) - (12), welche besteht aus: einem weiteren belüfteten Rohr, dezentralisiert bezüglich der äußeren Hülle (4), extern gehalten von einem Gitter, hineingesetzt in das erste Rohr und getrennt durch einen Zwischenraum (5), um den Rückfall und die Mischung des Materials zu erreichen; feste Verzögerer und Schüttler (7); Steigrohre für organische Substanzen von den den Küchen der verschiedenen Wohnungen innerhalb des Steigrohres (11); ein einzelnes Rohr (11), mit einer Schnecke darin (12), um den Kompost von den verschiedenen Etagen an die Spitze des Rohres zu heben.

8. Kompostierer bezügliche einem der Ansprüche 1 bis 7, integriert durch Prozess-Überwachungssysteme wie Thermometer (15), Hygrometer (16), Kameras (17), elektronische Nasen.

9. Die Nutzung eines Kompostierers bezüglich einem der Ansprüche 1 bis 8, bezüglich des Rückgewinnungsprozesses von verrottbarem öffentlichen Abfall mit dem Produkt, beschrieben in jedem der Ansprüche 1 bis 8, von der Beseitigung anderer Anteile von festem öffentlichen Abfall, einem resultierenden Mangel an organischem Material, von den differenzierten oder undifferenzierten Behältern eines Müllcontainers, charakterisiert durch weniger häufige und periodische Rückgänge ohne Probleme, wie Gerüche, ungesunde Umgebungen, und mit einer besseren Qualität und Quantität anderer Arten von Abfall, der Netzwerken von Wiederherstellung und Aufwertung zugeführt wird.

10. Die Nutzung eines Kompostierers bezüglich einem der Ansprüche 1 bis 8 in einem Verfahren für die Beseitigung festen öffentlichen Abfalls, folgend dem Wiedergewinnungsprozess verrottbaren öffentlichen Abfalls, erhalten mit dem in jedem der Ansprüche 1 bis 8 beschriebenen Produkt, charakterisiert durch Differenzierung und Trennung mit der völligen Entfernung der verschiedenen Anteile "sekundärer Rohstoffe", wie nassem Papier, Plastik, Glas, direkt aus der Küche des Hauses, wo sie anfallen, und nach möglicher Vorbehandlung durch Schreddern - Entwässerung - Volumenreduktion, durchzuführen in einem speziellen Haushaltsgerät, installiert in der Küche der Nutzer, durch Einfügen verschiedener Aufnahmerohre (23) für die verschiedenen Anteile (24), wie folgt: Rohr (a) für Essensabfall, Rohr (b) für anderes/undifferenziert, Rohr (c) für Papier und Pappe, Rohr (d) für Plastik, Rohr (e) für Glas, Rohr (f) für Metalle; die obengenannten separaten Rohre öffnen sich in Behälter und Container, leicht zu entleeren im Erdgeschoss oder Kellergeschoss (25 - 26), und sind außen an das Gebäude angebracht oder in speziellen, der Architektur angepassten und in das Gebäude integrierten Räumen untergebracht (27), möglicherweise mit Hebesystemen für die Verlegung und Wartung der Rohre selbst (28).

**Revendications**

1. Le composteur domestique, pour la transformation de la partie organique des déchets solides municipaux, qui appartient à l'immeuble et qui est **caractérisé par** un déploiement vertical, configuré pour fournir la liaison directe avec les cuisines des différents étages pour l'introduction de matériaux biodégradables directement à partir du lieu où elles se constituent, le transport, la mobilité et le retournement automatique par gravité également facilité par des obstacles fixes (7), l'exploitation par l'effet d'oxygénation-humidification du matériau et le convoyage vers le haut, loin des personnes et des objets, des émissions gazeuses et odorantes qui pourront éventuellement être traitées avec des bio-filtres, là où le composteur sera composé: d'un conduit isolé, installé verticalement sur la paroi extérieure du bâtiment, du rez-de-chaussée à la terrasse ou au toit (1) - (2), ouvert au passage d'air aux extrémités supérieure où se trouve une cheminée CAP et inférieure où se trouve une surface à lamelles avec ouvertures variables (18); d'un autre tuyau concentrique au premier, aéré avec différents trous le long de l'extension verticale (4) là où la partie basse du tube, où advient la maturation du composé, contient peu de trous, tandis que la partie supérieure, où adviennent les réactions de bio-oxydation, est **caractérisée par** de multiples trous et est bordée extérieurement par un filet, par un tissu non tissé, ou par un tissu spongieux qui respire (3), introduit à l'intérieur du premier tube et détaché d'un espace (5); de ralentisseurs, conteneurs fixes ou pliables pour le poids, configuré pour permettre un entrepôt dans le tube-composteur pour un certain nombre de jours (7); de conduits d'arrivée de la matière organique des cuisines des différents appartements à l'intérieur du tube aéré (6) éventuellement dotés d'une double fermeture hermétique avec système d'ouverture alterné (21) (22).

2. Le composteur selon la revendication 1, **caractérisé par** des systèmes fixes ou mobiles, répartis dans le tube aéré pour le ralentissement et le retournement de la matière (7) et pour l'accélération du processus de compostage, tels que: des obstacles fixes simples en forme de « U » renversé; des structures hélicoïdales plus complexes qui peuvent pivoter; des surfaces inclinées vers l'intérieur à forme de cuillères avec ou sans poche où mettre au préalable un composé mûr pour l'accélération du processus de dégradation des matières organiques.

3. Le composteur selon une des revendications 1 ou 2 intégré par un système de régulation de l'aération tels que des ventilateurs et/ou des aspirateurs (32).

4. Le composteur selon une quelconque des revendications 1 à 3 intégré de systèmes de régulation de l'humidité, tels que les humidificateurs (13) et/ou les gicleurs (14).

5. Le composteur selon une quelconque des revendications 1 à 4 intégré de systèmes de régulation de la température, tels que les tuyères de vapeur chaude, véhiculée par les hottes des cuisines des usagers (19) et/ou par des radiateurs électriques (20).

6. Le composteur selon une quelconque des revendications 1 à 5 **caractérisé par** un système implémentant la phase de bio-stabilisation dans le tube aéré séparé et indépendant pour les différents usagers-familles aux différents niveaux (8), tandis que la phase de maturation, qui est soit centralisée dans un même conteneur (29) situé à la base du tube , éventuellement doté de faneuse (30) où convergent, au préalable de leur expulsion à travers des systèmes (9) exploités par des leviers centralisés ou utilisés par la famille usagère (10), les matériaux partiellement minéralisés des différents étages, soit complétés dans un centre de compostage centralisé où sont transportés les matériaux prélevés périodiquement du réservoir au-dessous du composteur, qui se compose : d'une conduite disjointe installée verticalement sur le mur extérieur du bâtiment, du rez-de-chaussée à la terrasse ou au toit (1) - (2) ; d'un autre tube aéré, décentré par rapport à l'enveloppe extérieure (4), délimité extérieurement par un réseau ou un tissu non tissé ou par un tissu spongieux qui respire (3), introduit à l'intérieur du premier tube mais séparé par une brèche (5) ; de ralentisseurs et remueurs (7); de conduites d'arrivée de la matière organique depuis les cuisines des différents appartements jusqu'à l'intérieur du tube aéré (6); d'une seule conduite (33) sur toute la longueur du tuyau, où décharger, à travers un système de vis sans fin (9) commandé par l'usager (10) ou avec un système de vidange automatique qui utilise le poids de cette matière organique , le composté ou partiellement composté aux différents étages, afin que celui-ci atteigne le dispositif d'accumulation à la base du tube (29).

7. Le composteur, selon une quelconque des revendications 1 à 6, **caractérisé par** des mécanismes de levage et de mélange de matériaux biodégradables à partir des différents étages jusqu'au dernier, 11-12, qui se compose : d'un conduit isolé, placé en position verticale sur le mur extérieur du bâtiment, du rez-de-chaussée jusqu'à la terrasse ou au toit (1) - (2) ; d'un autre tube aéré (4) délimité extérieurement par un filet (3) placé à l'intérieur du premier conduit et duquel il est séparé par une brèche (5), pour la rechute et le retournement de la matière; de ralentisseurs, de remueurs (7); de conduits d'arrivée de la matière organique à partir des cuisines des divers appartements à l'intérieur du tube de levage (11); de tuyau (11) à système de vis sans fin (12) pour le soulèvement des matières biodégradables à partir des différents étages jusqu'à la sommité du conduit.

8. Le composteur selon une des revendications 1 à 7 intégré de systèmes de surveillance des processus, tels que des thermomètres, des hygromètres (15) (16), (17) des caméras, des senseurs électroniques.

9. L'usage du composteur selon une des quelconques revendications 1 à 8 dans une procédure, par suite au processus de récupération des déchets municipaux putrescibles, obtenue à travers le résultat décrit dans une des revendications 1 à 8, d'élimination de traitement des autres parcelles solides de déchets municipaux dépourvues de matière organique, à partir des bennes à ordures triées et non, **caractérisées par** des retraits périodiques moins fréquents et sans désagréments, tels que les mauvaises odeurs, un environnement empuanti et avec une meilleure qualité et quantité de typologies de déchets qui seront préposées dans les filières de récupération et de valorisation.

10. L'usage du composteur selon une des quelconques revendications 1 à 8 dans une procédure de traitement des déchets solides, suite au processus de récupération des déchets municipaux putrescibles obtenu à travers le résultat décrit dans une des revendications 1 à 8, **caractérisée par** la différenciation et le tri total avec expulsion des différentes fractions de « matières premières mineures », tels que les déchets organiques, le papier, le plastique, le verre, ainsi que d'autres, directement à partir de la cuisine du domicile au fur et à mesure qu'elles sont produites, en les absorbant à travers différents conduits d'arrivée (23) avec la possibilité de prétraitement de trituration, ou de déshydratation, ou même de réduction de quantité à accomplir avec un électroménager spécifique installé dans la cuisine, dans des conduits subdivisés pour les différentes fractions (24), et désignés comme suit : le conduit pour la substance organique (a), le conduit indistinct/indifférencié (b), le conduit pour le papier et le carton (c), (d)le conduit pour le plastique, le conduit pour le verre (e), le conduit pour le métal (f) ; les subdivisés conduits précités sont facilement déchargeables dans des bennes ou des conteneurs facilement délestables placés au rez-de-chaussée ou au sous-sol (25-26) et qui sont installés à l'extérieur de l'immeuble ou ajustés dans des pièces spéciales et architecturalement intégrées dans le bâtiment (27), éventuellement équipés de systèmes de levage pour l'installation l'aménagement et l'entretien des conduits considérés (28).

y

EP 2 772 474 B1

FIG. 1- TRASVERSAL SECT. - SCALE 1:3

**FIG.2-LONG.SECT.AA - SCALE 1:100   FIG.3-LONG.SECT.BB - SCALE 1:100**

15

FIG.4 - PARTICULARS - SCALE 1:20

FIG.5 - PARTICULARS - SCALE 1:20

FIG. 6 - TRASVERSAL SECT. 1-1 - SCALE 1:5

FIG. 7 - TRASVERSAL SECT. 2-2 - SCALE 1:5

32

8

FIG. 8 – SECT. AA  – SCALE 1:100

32

6

8

33

FIG. 9 – SECT. BB  – SCALE 1:100

FIG.10-PARTICULARS-SCALE 1:20     FIG.11-PARTICULARS-SCALE 1:20

FIG.12 - TRASVERSAL SECT. - SCALE 1:3

## SCALE 1:250

FIG.13-SECT. AA  FIG.14-SECT. BB  FIG.15-SECT. CC

**FIG. 16 - SECT. AA - SCALE 1:5**

**FIG. 17 - SECT. BB - SCALE 1:5**

FIG. 18 - SECT. CC  SCALE 1:5

**FIG.19 KITCHEN CABINET PLAN - SCALE 1:50**

**FIG.20 – SECT. OF THE VERT. DISPOSAL SYSTEM-SCALE1:100**

**EP 2 772 474 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3217725 C1, DOERING ERICH
- DE 19830421 C1
- DE 3019253 A1
- DE 29604924 U1
- DE 3743651 A1
- US 2001040131 A1
- JP H06107303 A
- KR 20120026230 A
- KR 20080029937 A
- JP H04305285 A